# EUROPEAN PATENT SPECIFICATION

(11) **EP 3 266 693 B1**
(45) Date of publication and mention of the grant of the patent: **29.04.2020**
(21) Application number: 15883863.1
(22) Date of filing: 03.03.2015
(51) Int. Cl.: B62M 6/90, B62J 11/00, H01M 2/10, B62K 19/30

(54) **ELECTRIC BICYCLE**
ELEKTRISCHES FAHRRAD
BICYCLETTE ÉLECTRIQUE

(43) Date of publication of application: 10.01.2018
(73) Proprietor: Panasonic Intellectual Property Management Co., Ltd., Osaka-shi, Osaka 540-6207 (JP)
(72) Inventor: OGAWA, Mitsuru, Osaka-shi Osaka 540-6207 (JP); AKAMATSU, Tetsuro, Osaka-shi Osaka 540-6207 (JP); YASUDA, Hirotoshi, Osaka-shi Osaka 540-6207 (JP)
(74) Representative: Grünecker Patent- und Rechtsanwälte PartG mbB
(86) International application number: PCT/JP2015/001090
(87) International publication number: WO 2016/139693

(56) References cited:
- JP-A- H0 689 126
- JP-A- H09 226 382
- JP-A- H09 226 382
- JP-A- H09 226 653
- JP-A- 2003 231 493
- JP-A- 2013 169 862
- KR-A- 20150 006 665

## Description

### [Technical Field]

The present invention relates to an electric bicycle provided with a detachable battery unit. A generic electrical bicycle having the features defined in the preamble of claim 1 is for instance known from JP H09 226382A A.

### [Background Art]

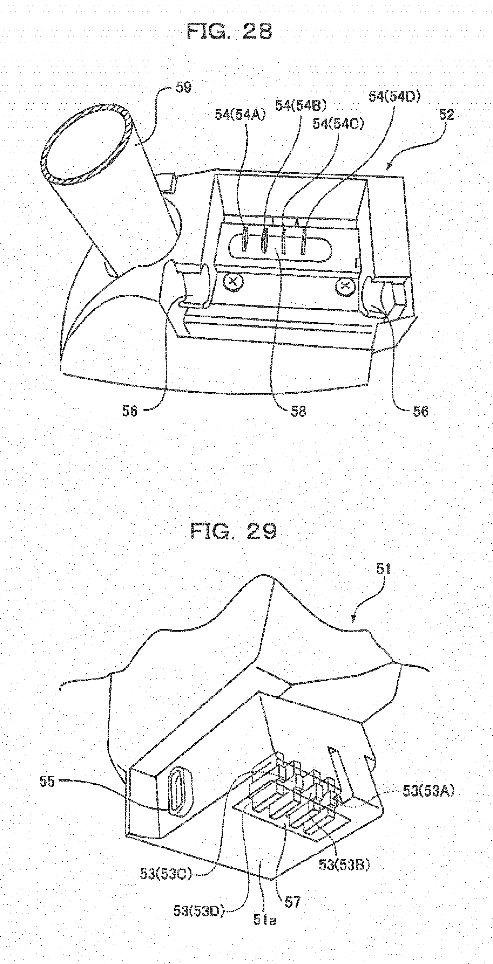

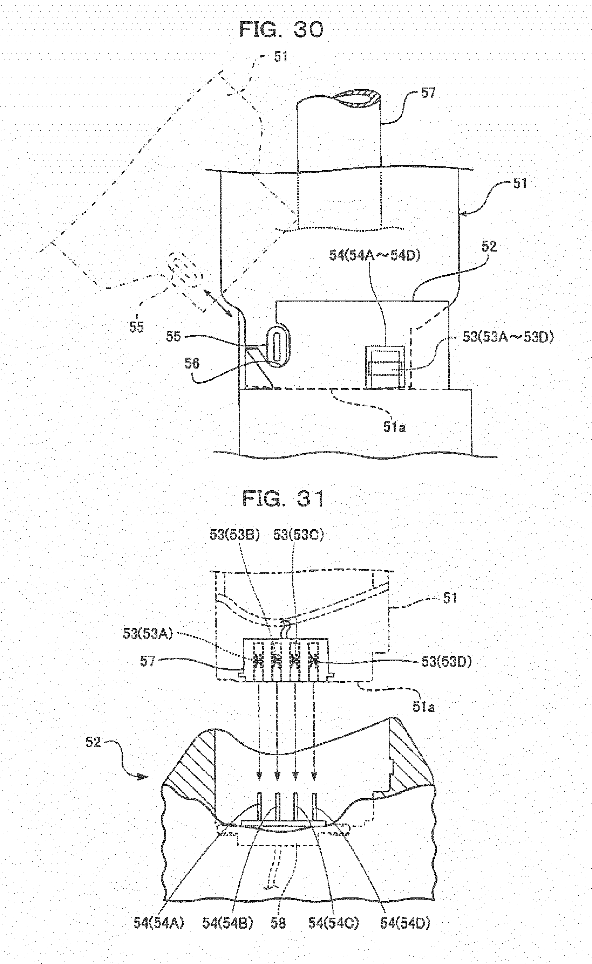

A battery unit for an electric bicycle is detachable in a battery installation portion provided on the body of the electric bicycle as disclosed, for example, in Patent Literatures 1 and 2. The battery unit can be charged separately from the body of the electric bicycle. As shown in FIGS. 28 to 31, a battery unit 51 and a battery installation portion 52 respectively include a plurality of (e.g., four) connecting terminals 53 (53A to 53D) and 54 (54A to 54D). When the battery unit 51 is installed, the corresponding connecting terminals 53A to 53D and 54A to 54D are connected to each other so as to supply power or input or output electric signals such as a control signal.

A rotating support shafts 55 that laterally projects (e.g., forward and backward) is provided in the lower end of the battery unit 51. The battery installation portion 52 has a shaft fitting grooves 56 where the rotating support shafts 55 are rotatably inserted. A battery locker (not shown) for locking the battery unit 51 is provided on a part of the body frame (e.g., a seat pipe 59) of the electric bicycle.

When the charged battery unit 51 is installed into the battery installation portion 52, the rotating support shafts 55 of the inclined battery unit 51 is inserted into the shaft fitting grooves 56 of the battery installation portion 52, and then the battery unit 51 is raised into engagement with the battery locker. This keeps the battery unit 51 in an upright position and connects the connecting terminals 53A to 53D and 54A to 54D of the battery unit 51 and the battery installation portion 52. The connecting terminals 53 of the battery unit 51 are vertically provided inside a bottom 51a of the battery unit 51 so as to remain untouched by hands and so on when the battery unit 51 is carried to be charged. The connecting terminals 54 of the battery installation portion 52 protrude upward from the battery installation portion 52 so as to properly come into contact with the connecting terminals 53 of the battery unit 51 when the battery unit 51 is installed, the connecting terminals 53 being provided inside the bottom 51a.

In this configuration, all the connecting terminals 53(53A to 53D) and 54(54A to 54D) are arranged in a row at the same distance from the rotating support shafts 55 in side view. The connecting terminals 53 of the installed battery unit 51 are in contact with the connecting terminals 54 of the battery installation portion 52 from both sides. When the battery unit 51 is installed, the connecting terminals 54 of the battery installation portion 52 are inserted to the connecting terminals 53 of the battery unit 51 so as to extend the connecting terminals 53 to both sides.

The connecting terminals 53 and 54 of the battery unit 51 and the battery installation portion 52 include, for example, the cathode(-) connecting terminals 53A and 54A for feeding and charging, the anode(+) connecting terminals 53C and 54C for feeding and charging, the communication connecting terminals 53B and 54B for inputting and outputting various control signals, and the connecting terminals 53D and 54D for detecting an installation state, i.e., whether or not the battery unit 51 has been installed into the battery installation portion 52. The battery unit 51 also includes a battery controller having the function of controlling the output of power from a battery included in the battery unit 51. When the battery controller confirms that the battery unit 51 is installed into the battery installation portion 52 to connect the connecting terminals 53D and 54D for detecting an installation state, power from the battery of the battery unit 51 is supplied to a motor attached to the body of the electric bicycle.

### [Citation List]

### [Patent Literatures]

[Patent Literature 1] JP2013-103581A
[Patent Literature 2] JP2005-104249A

### [Summary of Invention]

### [Technical Problems]

In the battery unit of the related art, however, all the connecting terminals 53(53A to 53D) and 54(54A to 54D) are laterally arranged in a row and thus if the battery unit 51 and the battery installation portion 52 cannot be increased in size along the arrangement direction of the connecting terminals 53 and 54 (For example, connector parts 57 and 58 having the connecting terminals 53 (53A to 53D) and 54 (54A to 54D) cannot be remarkably increased in size in the battery unit 51 and the battery installation portion 52), a distance between the adjacent connecting terminals 53 and 54 (a so-called interval between the connecting terminals) is short.

All the connecting terminals 53(53A to 53D) and 54(54A to 54D) are laterally arranged in a row and thus simultaneously come into contact with each other when the battery unit 51 is installed into the battery installation portion 52. Unfortunately, this requires a relatively large force during the installation of the battery unit 51.

The present invention has been devised to solve the problems. An object of the present invention is to provide an electric bicycle that can increase intervals between connecting terminals and reduce a force for installing a battery unit.

### [Solution to Problems]

In order to solve the aforementioned problems, the present invention provides an electric bicycle having the features defined in claim 1. Further preferred embodiments are defined in the dependent claims. The present invention provides an electric bicycle including a battery unit detachably installed into a battery installation portion provided on the body of the electric bicycle, wherein the battery installation portion and the battery unit include a plurality of connecting terminals connected to each other, the battery unit is installed into the battery installation portion while being pivoted about a pivot axis, and the connecting terminals of the battery unit and the battery installation portion are disposed in a plurality of rows at different distances from the pivot axis. Furthermore, according to the present invention, the connecting terminals in the adjacent rows or all the rows are laterally disposed at different positions when viewed along a direction from the pivot axis to the connecting terminals.

With this configuration, the connecting terminals of the battery unit and the battery installation portion are disposed in the rows at different distances from the pivot axis so as to reduce the number of connecting terminals disposed in the same row. This can increase a distance between the adjacent connecting terminals in the same row (an interval between the connecting terminals). Moreover, the contact (connection) timing of the connecting terminals varies between the rows, only requiring a relatively small force for installing the battery unit.

Moreover, according to the present invention, when the battery unit is pivoted to be installed, the contact timing of the connecting terminals varies between the rows. With this configuration, when the battery unit is installed, the contact timing of the connecting terminals can be shifted in steps for each of the different rows.

The connecting terminals in the adjacent rows or all the rows are laterally disposed at different positions when viewed along the direction from the pivot axis to the connecting terminals. Thus, a distance between the connecting terminals in the adjacent rows can be increased as compared with the case where the connecting terminals are laterally disposed at the same position when viewed along the separating direction from the pivot axis to the connecting terminals.

Since the connecting terminals in all the rows are laterally disposed at different positions when viewed along the direction from the pivot axis to the connecting terminals, a distance between the connecting terminals in the adjacent rows can be increased and wires connected to the connecting terminals can be easily installed without overlapping.

Moreover, according to the present invention, the connecting terminals in the same row in the battery unit are disposed at different positions along the direction of installation to the battery installation portion. With this configuration, the contact timing of the connecting terminals in the same row and the connecting terminals of the corresponding battery installation portion can be shifted in steps when the battery unit is installed. Thus, in the installation of the battery unit, the application of a force can be shifted in steps when the connecting terminals in the same row are connected.

Furthermore, according to the present invention, the connecting terminals provided in the battery unit and the battery installation portion are connecting terminals for detecting an installation state, the installation of the battery unit into the battery installation portion is detected when the connecting terminals for detecting an installation state are electrically connected to each other, and the connecting terminals for detecting an installation state in the battery unit and the battery installation portion are disposed in the row at the largest distance from the pivot axis.

For example, in the case where all the connecting terminals are set to simultaneously come into contact with each other, if the connecting terminals for detecting an installation state come into contact with each other by a manufacturing error to supply power just before the connecting terminals for feeding are brought into contact with each other, the connecting terminals for feeding may be deteriorated by an inrush current. With the configuration, however, the connecting terminals for detecting an installation state are disposed in the row at the largest distance from the pivot axis. Thus, when the battery unit is installed into the battery installation portion, the connecting terminals for detecting an installation state can be connected to each other (brought into contact with each other) after the other connecting terminals. This can further reduce the possibility that the connecting terminals for feeding may be deteriorated by an inrush current, thereby improving safety.

If the connecting terminals are laterally arranged in a row, the connecting terminals need to be disposed at different positions in the direction of installation so as to shift the contact timing in multiple steps. This may cause upsizing of a socket unit for attaching the connecting terminals. In contrast, in the present configuration, the connecting terminals of the battery unit and the battery installation portion are disposed in the rows at different distances from the pivot axis. Thus, the contact timing of the connecting terminals can vary between the rows, thereby reducing the number of positions of the connecting terminals in the rows in the direction of installation. Unlike in the case where all the connecting terminals are laterally arranged in a row, this configuration can reduce the size of the socket unit for attaching the connecting terminals.

According to the present invention, at the installation point of the battery unit and the battery installation portion, a recessed portion and a projecting portion are provided near the pivot axis and remote from the pivot axis so as to be fit to each other.

With this configuration, when the battery unit is installed into the battery installation portion, the recessed portion and the projecting portion at the installation point of the battery unit and the battery installation portion are fit to each other so as to be guided and positioned on both sides, thereby properly installing the battery unit.

### [Advantageous Effects of Invention]

According to the present invention, the connecting terminals provided at the battery installation portion and the battery unit are disposed in the rows at different distances from a rotating support shaft, thereby increasing a distance between the adjacent connecting terminals in the same row (an interval between the connecting terminals). This can more reliably prevent a short circuit between the connecting terminals, thereby improving safety. Moreover, the contact (connection) timing of the connecting terminals varies between the rows. This can disperse a force for installing the battery unit and only require a relatively small force.

The connecting terminals in the adjacent rows or all the rows are laterally disposed at different positions when viewed along the direction from the pivot axis to the connecting terminals. Thus, a distance between the connecting terminals in the adjacent rows can be increased as compared with the case where the connecting terminals are laterally disposed at the same position when viewed along the direction from the pivot axis to the connecting terminals. This configuration can reliably prevent a short circuit between the connecting terminals, thereby improving safety.

Moreover, the contact timing of the connecting terminals varies when the battery unit is pivoted to be installed. Thus, the contact timing of the connecting terminals can be shifted in steps for each of the different rows.

The connecting terminals in all the rows are laterally disposed at different positions when viewed along the direction from the pivot axis to the connecting terminals. Thus, the wires connected to the connecting terminals can be easily installed without overlapping.

The connecting terminals in the same row in the battery unit are disposed at different positions along the direction of installation to the battery installation portion. Thus, during the installation of the battery unit, the contact timing of the connecting terminals in the same row of the battery unit and the connecting terminals of the corresponding battery installation portion can be shifted in steps. This can further disperse a force for installing the battery unit and only require a relatively small force.

The connecting terminals in the battery unit and the battery installation portion are connecting terminals for detecting an installation state. The connecting terminals for detecting an installation state in the battery unit and the battery installation portion are disposed in the row at the largest distance from the pivot axis. Thus, when the battery unit is installed into the battery installation portion, the connecting terminals for detecting an installation state can be connected each other (brought into contact with each other) after the other connecting terminals. This can prevent an inrush current from deteriorating the connecting terminals for feeding, thereby improving safety. According to this configuration, the connecting terminals of the battery unit and the battery installation portion are disposed in the rows at different distances from the pivot axis. This can shift the contact timing for each of the rows and reduce the number of positions of the connecting terminals in the rows in the direction of installation, thereby reducing the size of the socket unit for attaching the connecting terminals.

The connecting terminals in the battery unit and the battery installation portion are connecting terminals for detecting an installation state. The connecting terminals for detecting an installation state in the battery unit and the battery installation portion are disposed in the row at the largest distance from the pivot axis. Thus, when the battery unit is installed into the battery installation portion, the connecting terminals for detecting an installation state can be connected each other (brought into contact with each other) after the other connecting terminals. This can prevent an inrush current from deteriorating the connecting terminals for feeding, thereby improving safety. According to this configuration, the connecting terminals of the battery unit and the battery installation portion are disposed in the rows at different distances from the pivot axis. This can shift the contact timing for each of the rows and reduce the number of positions of the connecting terminals in the rows in the direction of installation, thereby reducing the size of the socket unit for attaching the connecting terminals.

At the installation point of the battery unit and the battery installation portion, a recessed portion and a projecting portion are provided near the pivot axis and remote from the pivot axis so as to be fit to each other. Thus, when the battery unit is installed into the battery installation portion, the recessed portion and the projecting portion at the installation point of the battery unit and the battery installation portion are fit to each other so as to be guided and positioned on both sides, thereby properly installing the battery unit. Even if the battery unit is being reversely installed, the recessed portion and the projecting portion interfere with each other, thereby preventing the battery unit from being reversely installed. This can prevent damage or deformation of the connecting terminals, thereby improving reliability.

### [Brief Description of Drawings]

[FIG. 1] FIG. 1 is an overall side view showing an electric bicycle according to an embodiment of the present invention.
[FIG. 2] FIG. 2 is a perspective view showing a battery unit for the electric bicycle.
[FIG. 3] FIG. 3 is a perspective view showing a battery installation portion for the electric bicycle and the vicinity of the battery installation portion.
[FIG. 4] FIG. 4 is a plan view showing the battery unit and the battery installation portion for the electric bicycle.
[FIG. 5] FIG. 5 is a perspective view showing the battery installation portion for the electric bicycle when viewed from the upper left.
[FIG. 6] FIG. 6 is a perspective view showing the battery installation portion for the electric bicycle when viewed from the left.
[FIG. 7] FIG. 7 is a perspective view showing the principal part of the bottom of the battery unit for the electric bicycle when viewed from diagonally below.
[FIG. 8] FIG. 8 is a perspective view showing the battery unit and the battery installation portion for the electric bicycle at the start of the installation of the battery unit.
[FIG. 9] FIG. 9 is a plan view showing the battery unit and the battery installation portion for the electric bicycle at the start of the installation of the battery unit.
[FIG. 10] FIG. 10 is a perspective view showing the battery unit and the battery installation portion for the electric bicycle during the installation of the battery unit.
[FIG. 11] FIG. 11 is a plan view showing the battery unit and the battery installation portion for the electric bicycle during the installation of the battery unit.
[FIG. 12] FIG. 12 is a perspective view showing a battery locker for the electric bicycle and the vicinity of the battery locker.
[FIG. 13] FIG. 13 is a perspective view showing the principal part of the top of the battery unit for the electric bicycle when viewed from diagonally above.
[FIG. 14] FIG. 14 is a plan view showing the battery unit and the battery installation portion for the electric bicycle during the installation of the battery unit.
[FIG. 15] FIG. 15 is a perspective view showing the battery unit and the battery installation portion for the electric bicycle at the completion of the installation of the battery unit.
[FIG. 16] FIG. 16 is a plan view showing the principal part of the bottom of the battery unit and the battery installation portion for the electric bicycle while the battery unit is installed.
[FIG. 17] FIG. 17 is a perspective view showing a battery connector for the electric bicycle when viewed from diagonally below.
[FIG. 18] FIG. 18 is a plan view showing the battery connector for the electric bicycle.
[FIG. 19] FIG. 19 is a sectional plan view showing the battery connector for the electric bicycle (a sectional plan view taken along line A-A of FIG. 17).
[FIG. 20] FIG. 20 is a sectional side view showing the battery connector for the electric bicycle.
[FIG. 21] FIG. 21 is a plan view showing a body-side connector for the electric bicycle.
[FIG. 22] FIG. 22 is a perspective view showing the body-side connector for the electric bicycle.
[FIG. 23] FIG. 23 is a side view showing the body-side connector for the electric bicycle.
[FIG. 24] FIG. 24 is a partially cut side view showing the battery connector and the body-side connector for the electric bicycle.
[FIG. 25] FIG. 25 is a plan view showing the principal part of the battery unit and the battery installation portion for the electric bicycle during the installation of the battery unit.
[FIG. 26] FIG. 26 is a plan view showing the principal part of the battery unit and the battery installation portion for the electric bicycle during the installation of the battery unit.

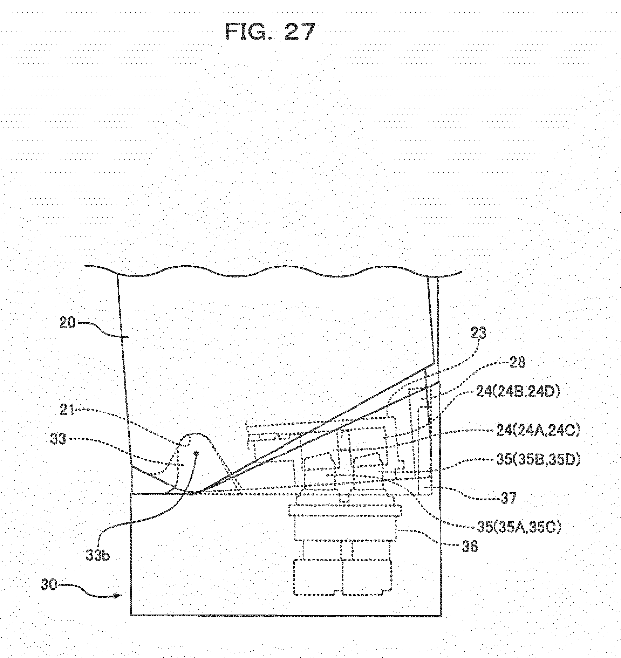

[FIG. 27] FIG. 27 is a plan view showing the principal part of the battery unit and the battery installation portion for the electric bicycle during the installation of the battery unit.
[FIG. 28] FIG. 28 is a perspective view showing a battery installation portion for an electric bicycle according to the related art and the vicinity of the battery installation portion when viewed from diagonally above.
[FIG. 29] FIG. 29 is a perspective view showing the bottom of a battery unit for the electric bicycle according to the related art when viewed from diagonally below.
[FIG. 30] FIG. 30 is a rear view for explaining an installation state of the battery installation portion and the battery unit for the electric bicycle according to the related art.
[FIG. 31] FIG. 31 is a partially cut side view showing the principal part of the battery installation portion and the battery unit for the electric bicycle according to the related art.
[FIG. 32] FIG. 32 is a perspective view showing the bottom of a battery unit for another electric bicycle according to the related art when viewed from diagonally below.
[FIG. 33] FIG. 33 is a rear view for explaining an installation state of a battery installation portion and the battery unit for the electric bicycle according to the related art.
[FIG. 34] FIG. 34 is a partially cut side view showing the principal part of the battery installation portion and the battery unit for the electric bicycle according to the related art.

### [Description of Embodiment]

An embodiment of the present invention will be described below in accordance with the accompanying drawings. In the following explanation, a longitudinal direction and a lateral direction (width direction) are set relative to the traveling direction of a rider on an electric bicycle.

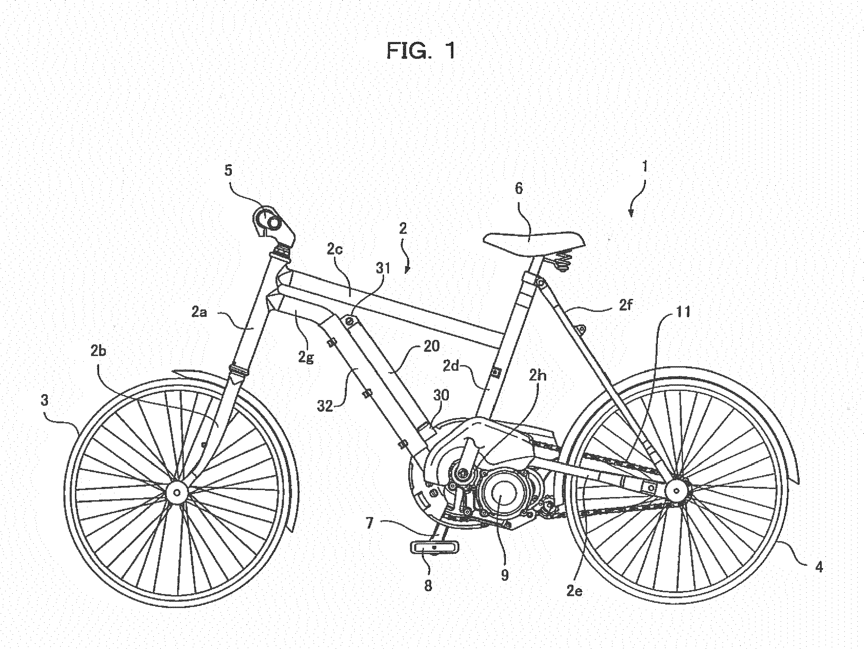

In FIG. 1, reference numeral 1 denotes the electric bicycle according to the embodiment of the present invention. As shown in FIG. 1, the electric bicycle 1 has a metallic frame 2 including a head tube 2a, a front fork 2b, a top tube 2c, a down tube 2g, a bracket lug 2h, a seat tube 2d, a chain stay 2e and a seat stay 2f. The electric bicycle 1 further has a front wheel 3 rotatably attached to the lower end of the front fork 2b, a rear wheel 4 rotatably attached to the rear end of the chain stay 2e, a handle bar 5 that changes the direction of the front wheel 3, a saddle 6 for placing a hip, a crank 7 and pedals 8 that receive a human driving force including a pedal force, a motor drive unit 9 including an electric motor (not shown) serving as a driving source for generating an auxiliary driving force (assisting force), a controller (main controller) for various kinds of electrical control on the motor and so on, a battery unit 20 having a case that stores (contains) a battery including a secondary battery for supplying driving power to the motor and a battery controller, a battery installation portion 30 that is mounted on the frame 2 so as to detachably install the battery unit 20, and a chain (driving force transmission member) 11 that transmits a human driving force based on a pedal force from the crank 7 and an auxiliary driving force from the motor drive unit 9 to the rear wheel 4. The body of the electric bicycle includes constituent elements (constituent elements other than the battery unit 20 in the electric bicycle 1) such as the frame 2, the front wheel 3, the rear wheel 4, and the battery installation portion 30 of the electric bicycle 1.

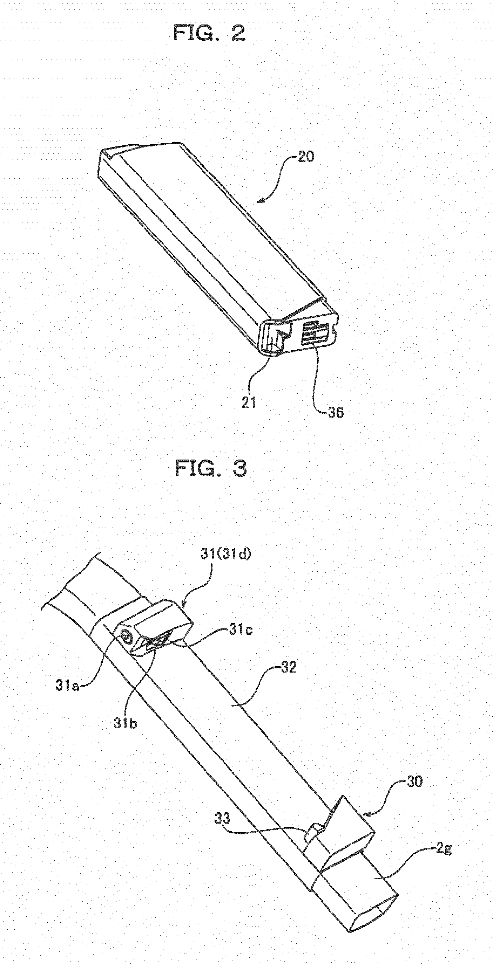

As shown in, for example, FIGS. 1 to 4, in the present embodiment, the battery installation portion 30 for installing the battery unit 20 is attached to the top surface of the down tube 2g near the lower end of the down tube 2g. Moreover, a battery locker 31 for locking the battery unit 20 is provided on the top surface of the down tube 2g near the upper end of the down tube 2g. In the present embodiment, the down tube 2g is substantially rectangular in cross section and the battery unit 20 is installed between the battery installation portion 30 and the battery locker 31 so as to extend along the top surface of the down tube 2g. In the present embodiment, as shown in FIG. 3, a mount 32 is fixed to the down tube 2g so as to cover the down tube 2g diagonally from the top. The battery installation portion 30 is attached to the lower end of the mount 32 while the battery locker 31 is attached near the upper end of the mount 32. However, the present invention is not limited to this configuration. The battery installation portion 30 and the battery locker 31 may be directly fixed to the down tube 2g.

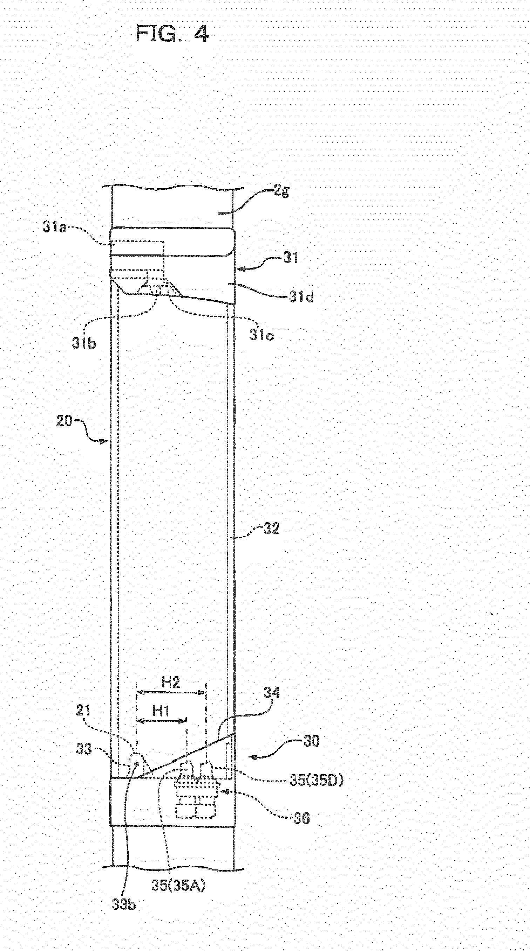

As shown in, for example, FIGS. 4 to 7, the battery installation portion 30 includes a pivot protrusion 33 that protrudes diagonally upward from an installation surface 30a, on which the battery unit 20 is installed, and longitudinally extends in a diagonal direction so as to be inserted (fit) into a pivot storage portion 21 when the battery unit 20 is installed, the pivot storage portion 21 being recessed on a bottom 20a of the battery unit 20. The battery installation portion 30 further includes a holding edge wall 34 that is formed so as to hold the bottom of the battery unit 20 from the outside, and a body-side connector 36 where a plurality of connecting terminals 35 (35A to 35D) are attached (four connecting terminals in the present embodiment). The upper part of the pivot protrusion 33 is semicircular in cross section. The upper part of the pivot storage portion 21 of the battery unit 20 is recessed into a semicircular shape in cross section, accordingly. Moreover, connecting terminals 24 (24A to 24D) to be connected to the connecting terminals 35 (35A to 35D) of the battery installation portion 30 are formed inside the bottom of the battery unit 20.

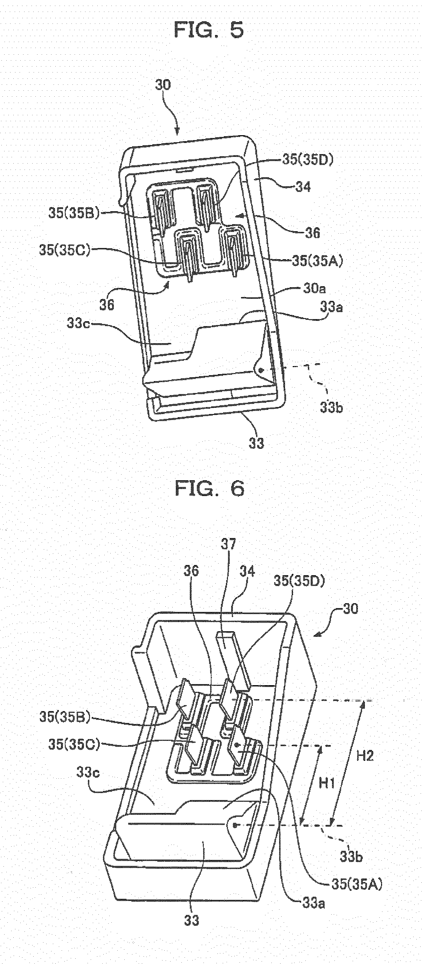

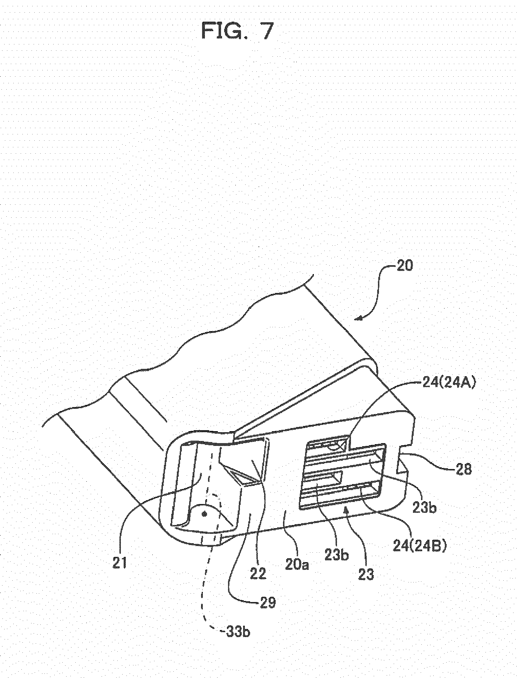

When the battery unit 20 is installed, the semicircular parts of the pivot protrusion 33 and the pivot storage portion 21 are slidably brought into contact with each other such that the battery unit 20 can pivot relative to the battery installation portion 30 with a pivot axis 33b disposed at the center of the semicircular parts. Furthermore, in the present embodiment, the pivot protrusion 33 includes an installation-portion regulation projection (regulation rib) 33a. At the bottom of the battery unit 20, a battery regulation recess 22 corresponding to the installation-portion regulation projection 33a is formed to allow fitting of the installation-portion regulation projection 33a. Moreover, an installation-portion regulation recess 33c is formed next to the installation-portion regulation projection 33a of the pivot protrusion 33. At the bottom of the battery unit 20, a battery regulation projection 29 corresponding to the installation-portion regulation recess 33c is formed next to the battery regulation recess 22 so as to be fit into the installation-portion regulation recess 33c. As shown in, for example, FIGS. 7, 16, and 25, an auxiliary regulation recess 28 is formed on the right of the bottom of the battery unit 20 (i.e., on the opposite side from the location of the pivot storage portion 21 at the bottom of the battery unit 20) so as to vertically extend while being recessed to the left. As shown in, for example, FIGS. 6, 16, and 25, an auxiliary regulation projection 37 that can be fit into the auxiliary regulation recess 28 of the battery unit 20 is formed on the right of the holding edge wall 34 of the battery installation portion 30 (i.e., on the opposite side from the location of the pivot protrusion 33 of the battery installation portion 30) so as to vertically extend while protruding to the right.

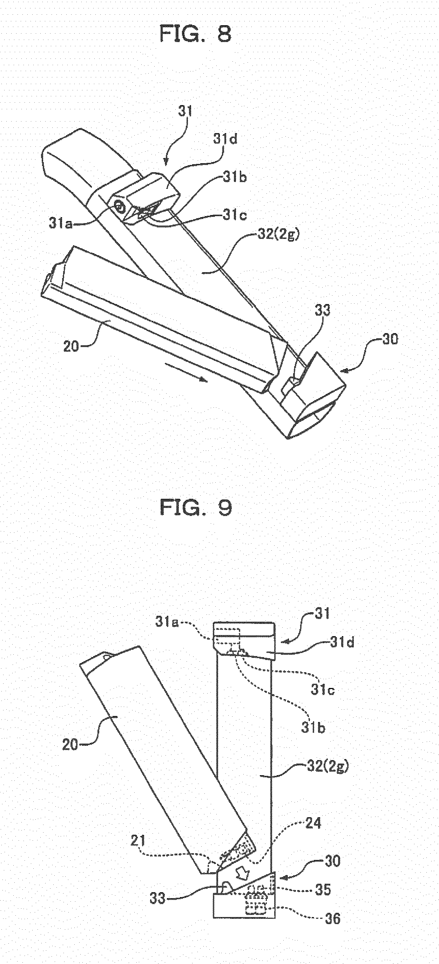

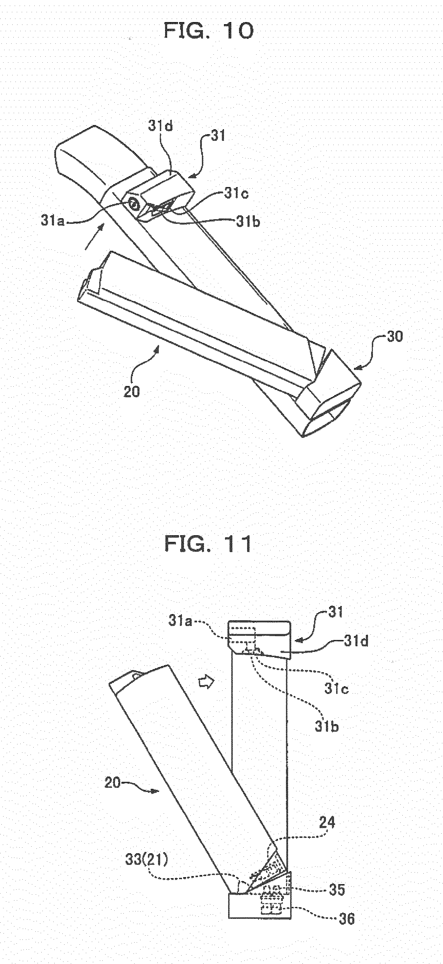

The position and so on of the installed battery unit 20 will be more specifically described below. When the battery unit 20 is installed, as shown in FIGS. 8 to 11, the battery unit 20 with the upper part inclined upward to the left is moved diagonally downward such that the pivot protrusion 33 of the battery installation portion 30 is fit into the pivot storage portion 21 of the battery unit 20. In this state, the upper part of the battery unit 20 is pivoted to the right about the pivot axis 33b diagonally extending (vertically and longitudinally) in the pivot protrusion 33.

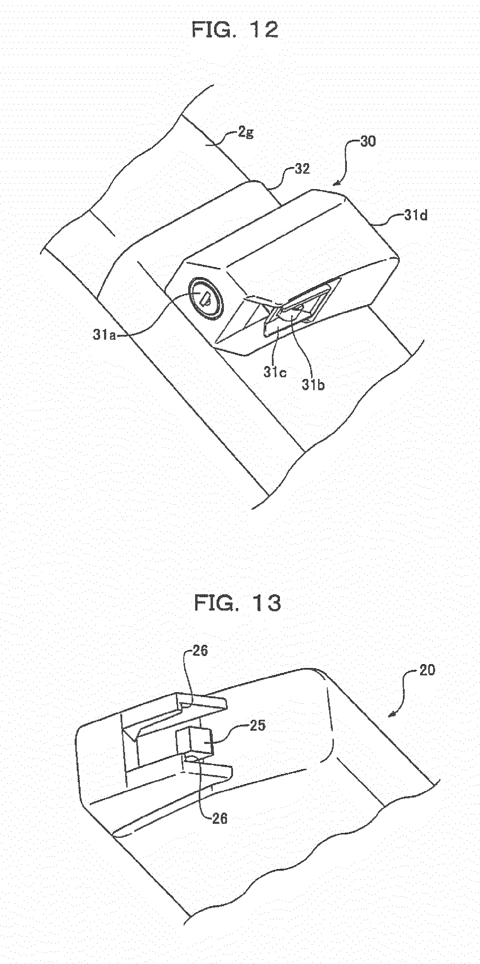

As shown in FIGS. 12 and 13, the battery locker 31 has a lock unit 31a that can be locked with an insertable key, a main body 31d containing the lock unit 31a, a lock claw 31b that can protrude and retract relative to the installation point of the battery unit 20 from the main body 31d, and an engaged portion 31c that can be engaged with an engaging portion 26 formed on the upper end of the battery unit 20. The upper end of the battery unit 20 has a protrusion 25 engageable with the lock claw 31b of the battery locker 31, and engaging portions 26 that can be locked to the engaged portion 31c of the battery locker 31. The engaged portion 31c of the battery locker 31 is extended outward like a flange with a clearance around the lock claw 31b. The engaging portion 26 of the battery unit 20 is substantially L-shaped in side view so as to be inserted between the engaged portion 31c and the main body 31d of the battery locker 31 from both sides.

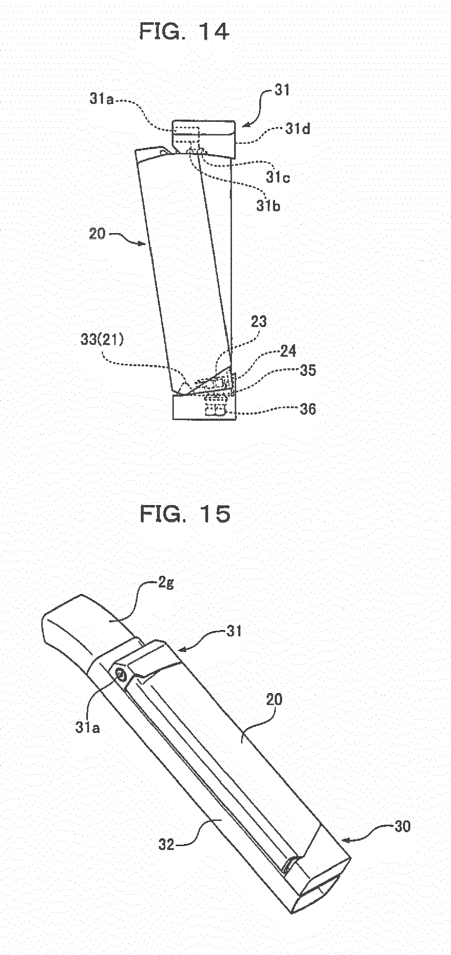

As shown in FIG. 14, the battery unit 20 is pivoted (raised) to the right about the pivot axis 33b so as to extend along the down tube 2g and the mount 32. This fits the installation-portion regulation projection 33a to the battery regulation recess 22 and fits the battery regulation projection 29 to the installation-portion regulation recess 33c. Thus, the position of the battery unit 20 is regulated in a diagonally longitudinal direction. The engaging portion 26 of the battery unit 20 is inserted above the engaged portion 31c of the battery locker 31 (between the engaged portion 31c and the main body 31d of the battery locker 31), determining the position of the battery unit 20 in the longitudinal direction (Specifically, along the longitudinal direction of the down tube 2g). Moreover, the battery unit 20 is pivoted to the right so as to lock the protrusion 25 of the battery unit 20 over the lock claw 31b of the battery locker 31. As shown in FIGS. 15 and 4, the battery unit 20 is fixed while being completely positioned.

As shown in FIG. 14, when the bottom of the battery unit 20 is pivoted (raised) to the right about the pivot axis 33b so as to reach the location of the holding edge wall 34 of the battery installation portion 30, the bottom of the battery unit 20 is guided to the holding edge wall 34 of the battery installation portion 30 and the auxiliary regulation recess 28 at the bottom of the battery unit 20 is fit to the auxiliary regulation projection 37 of the battery installation portion 30 so as to be fixed in a properly positioned state. The auxiliary regulation projection 37 is formed on the right of the battery installation portion 30, the installation-portion regulation projection 33a is formed on the left of the battery installation portion 30, and the auxiliary regulation projection 37 and the installation-portion regulation projection 33a having different shapes are disposed at different positions. Thus, even if the battery unit 20 is reversely installed in a lateral direction by mistake, the battery unit 20 comes into contact with the auxiliary regulation projection 37 and the installation-portion regulation projection 33a of the battery installation portion 30, preventing the insertion of the bottom of the battery unit 20 into the battery installation portion 30. Thus, the connecting terminals 35(35A to 35D) of the battery installation portion 30 are not damaged or deformed by erroneously inserting the battery unit 20 in a wrong direction.

As shown in, for example, FIGS. 4 to 7 and FIGS. 16 to 24, in the present embodiment, the multiple (four in the present embodiment) connecting terminals 24(24A to 24D) are provided at the bottom of the battery unit 20. The connecting terminals 24(24A to 24D) are disposed so as to be attached to a battery-side connector 23. The connecting terminals 24 (24A to 24D) are connectable to the connecting terminals 35(35A to 35D) of the battery installation portion 30. In order to prevent an electric shock received by erroneously touching the connecting terminals 24 with a hand when the battery unit 20 to be charged is carried, the connecting terminals 24 of the battery unit 20 are vertically provided inside the bottom 20a of the battery unit 20. When the battery unit 20 is installed, the connecting terminals 35 of the battery installation portion 30 vertically protrude from the installation surface 30a of the battery installation portion 30 so as to properly come into contact with the internally provided connecting terminals 24 of the battery unit 20.

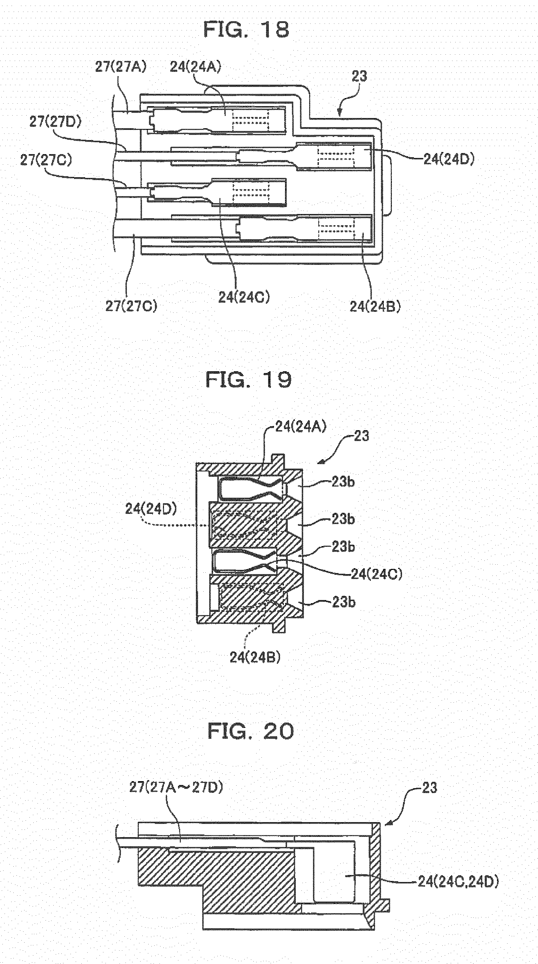

Reference numeral 23b in FIG. 19 denotes holes formed at the bottom 20a of the battery unit 20 so as to allow insertion of the connecting terminals 35 (35A to 35D) of the body-side connector 36. The connecting terminals 24 (24A to 24D) are disposed inside the openings of the holes 23b at the bottom 20a.

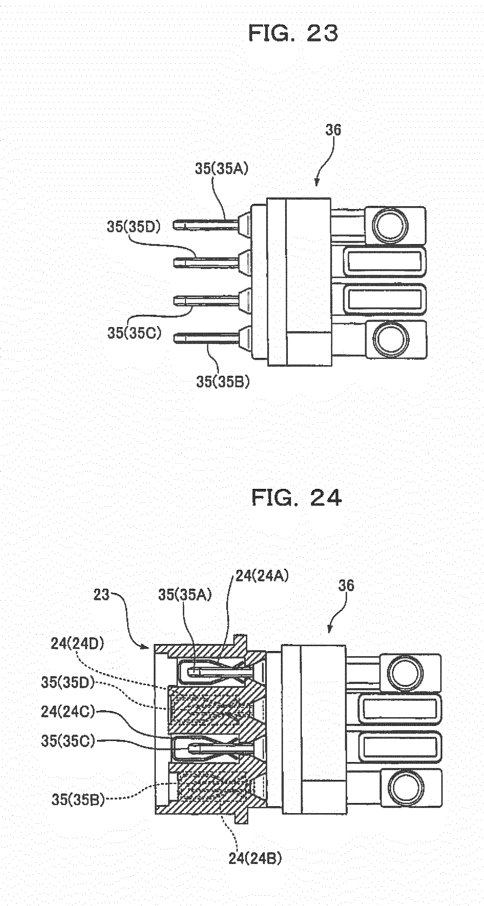

As shown in FIGS. 19 and 24, the connecting terminals 24 (24A to 24D) of the installed battery unit 20 come into contact with the connecting terminals 35 (35A to 35D) of the battery installation portion 30 from the right and left. When the battery unit 20 is installed, the connecting terminals 35 (35A to 35D) of the battery installation portion 30 are inserted into the connecting terminals 24 (24A to 24D) of the battery unit 20 so as to laterally extend the connecting terminals 24 (24A to 24D).

As shown in, for example, FIGS. 5 and 6, the connecting terminals 24 and 35 of the battery unit 20 and the battery installation portion 30 include the cathode(-) connecting terminals 24A and 35A for feeding and charging, the anode(+) connecting terminals 24C and 35C for feeding and charging, the communication connecting terminals 24B and 35B for inputting and outputting various control signals, and the connecting terminals 24D and 35D for detecting an installation state of the battery unit 20 in the battery installation portion 30. Moreover, the battery unit 20 includes the battery controller that has the function of controlling the output of power from the stored battery. When the battery controller confirms a notification that the battery unit 30 is attached to the battery installation portion 30 and the connecting terminals 24D and 35D for detecting an installation state are connected to each other, power from the battery of the battery unit 20 is supplied to the motor attached to the body of the electric bicycle.

In the present invention, however, the connecting terminals 35 (35A to 35D) provided on the body-side connector portion 36 of the battery installation portion 30 and the connecting terminals 24 (24A to 24D) of the battery unit 20 as shown in, for example, FIGS. 4 to 6, 17, and 22 are arranged in multiple rows (two rows in the present embodiment) at different distances (H1, H2) from the pivot axis 33b, unlike in the related art where the connecting terminals are laterally arranged in a row. The connecting terminals 24 (24A to 24D) and 35 (35A to 35D) come into contact with each other at different times for the respective rows (the shorter the distance from the pivot axis 33b, the sooner the connecting terminals 24 (24A to 24D) and 35 (35A to 35D) come into contact with each other, that is, in the present embodiment, the connecting terminals 24A, 24C, 35A, and 35C in the row at a short distance from the pivot axis 33b come into contact with each other sooner than the connecting terminals 24B, 24D, 35B, and 35D in the row at a large distance from the pivot axis 33b). As shown in, for example, FIGS. 5, 6, 17, 18, and 22, the connecting terminals 24 and 35 in the adjacent rows (In the present embodiment, the connecting terminals 24 and 35 out of connecting terminals in all rows) are laterally disposed at different positions when viewed along the direction from the pivot axis 33b to the connecting terminals 24 and 35. In the present embodiment, the four connecting terminals 24 (24A to 24D) and 35 (35A to 35D) are staggered in two rows.

Furthermore, the connecting terminals 24 (the connecting terminal 24A and the connecting terminal 24B or the connecting terminal 24C and the connecting terminal 24D) in the same row in the battery unit 20 are disposed at different heights (depths) from the bottom 20a of the battery unit 20 along the direction of installation to the battery installation portion 30.

When the connecting terminals 24D and 35D for detecting an installation state are connected to each other, the cathode(-) connecting terminals 24A and 35A are securely connected to each other and the anode(+) connecting terminals 24B and 35B are securely connected to each other. Specifically, the connecting terminals 24 and 35 are disposed such that when the battery unit 20 is installed into the battery installation portion 30, the cathode(-) connecting terminals 24A and 35A, the communication connecting terminals 24C and 35C, the anode(+) connecting terminals 24B and 35B, and the connecting terminals 24D and 35D for detecting an installation state (or the cathode(-) connecting terminals 24A and 35A, the anode(+) connecting terminals 24B and 35B, the communication connecting terminals 24C and 35C, and the connecting terminals 24D and 35D for detecting an installation state) sequentially come into contact with each other at three or four different times. In other words, the connecting terminals 24D and 35D for detecting an installation state finally come into contact with each other.

This point will be more specifically described below. If all the connecting terminals 24 of the battery unit 20 are set to simultaneously come into contact with the connecting terminals 35, the connecting terminals 24D and 35D for detecting an installation state may be brought into contact with each other by a manufacturing error and so on just before the cathode(-) connecting terminals 24A and 35A come into contact with each other and the anode(+) connecting terminals 24B and 35B come into contact with each other. When power is supplied in this state, the cathode(-) connecting terminals 24A and 35A and the anode(+) connecting terminals 24B and 35B may be deteriorated by an inrush current. Thus, such a problem is prevented by the structure of the present embodiment.

In the present embodiment, the cathode(-) connecting terminals 24A and 35A and the communication connecting terminals 24C and 35C are disposed in the row near the pivot axis 33b (in the row at the distance H1), whereas the anode(+) connecting terminals 24B and 35B and the connecting terminals 24D and 35D for detecting an installation state are disposed in the row remote from the pivot axis 33b (in the row at the distance H2). In the row near the pivot axis 33b, the cathode(-) connecting terminals 24A and 35A are disposed at a position (height) closer to the bottom 20a than the communication connecting terminals 24C and 35C. In the row remote from the pivot axis 33b, the anode(+) connecting terminals 24B and 35B are disposed at a position (height) closer to the bottom 20a than the connecting terminals 24D and 35D for detecting an installation state. In other words, the connecting terminals 24 and 35 are disposed at the two different distances from the bottom 20a.

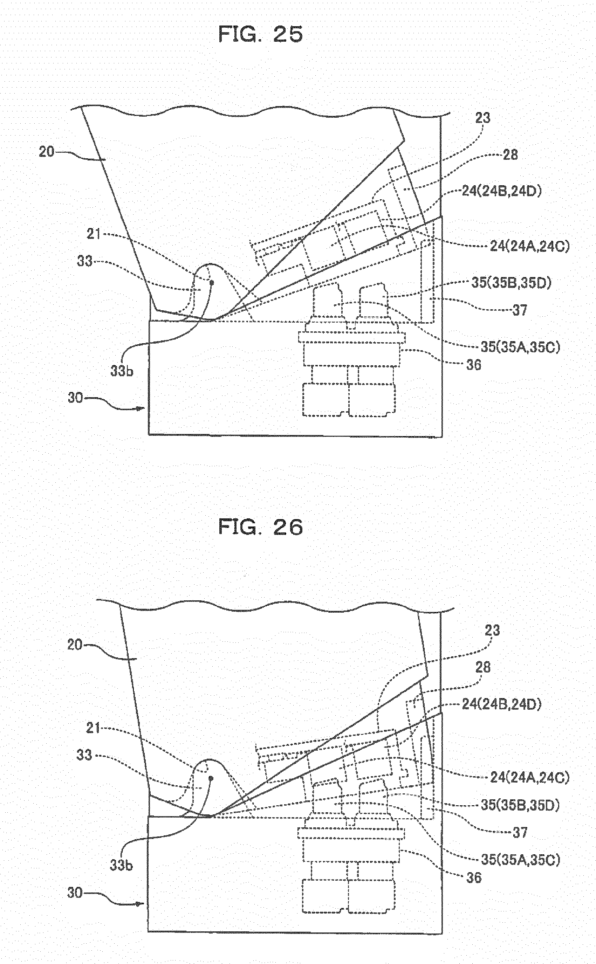

The same components are used for all the connecting terminals 24 (24A to 24D) of the battery unit 20. In the battery-side connector 23, the connecting terminals are disposed only at the two different mounting positions (mounting heights). Wires for feeding, communications, and detection are connected to the connecting terminals 24 and 35. Moreover, the same components are used for all the connecting terminals 35 (35A to 35D) of the battery installation portion 30. The connecting terminals 35 (35A to 35D) protrude to the same height from the installation surface 30a of the battery installation portion 30. Furthermore, in the present embodiment, the connecting terminals 35 (35A to 35D) of the battery installation portion 30 have inclined ends. As shown in, for example, FIG. 26, the connecting terminals 24 and 35 can be properly brought into contact with each other with a long contact length at the beginning of the contact.

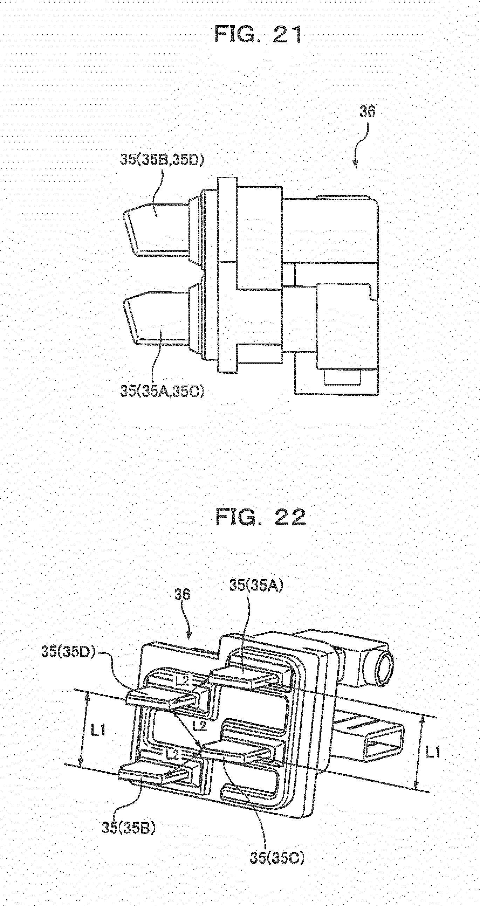

With this configuration, the number of connecting terminals 24 and 35 disposed in the same row can be reduced from four to two. This can increase a distance (an interval between the connecting terminals) L1 (FIG. 22) between the adjacent connecting terminals 24 and 35 in the same row (between the connecting terminals 24A and 35A and the connecting terminals 24C and 35C and between the connecting terminals 24B and 35B and the connecting terminals 24D and 35D). This can reliably prevent a short circuit between the adjacent connecting terminals 24 and 35 in the same row, i.e., between the connecting terminals 24A and 35A and the connecting terminals 24C and 35C and between the connecting terminals 24B and 35B and the connecting terminals 24D and 35D, thereby improving safety.

Moreover, the contact timing of the connecting terminals 24 and 35 of the battery unit 20 and the battery installation portion 30 varies between the rows (in other words, the contact timing of the connecting terminals 24A, 35A, 24C, and 35C in the row near the pivot axis 33b does not coincide with the contact timing of the connecting terminals 24B, 35B, 24D, and 35D in the row remote from the pivot axis 33b). Thus, the battery unit 20 can be advantageously installed with a relatively small force.

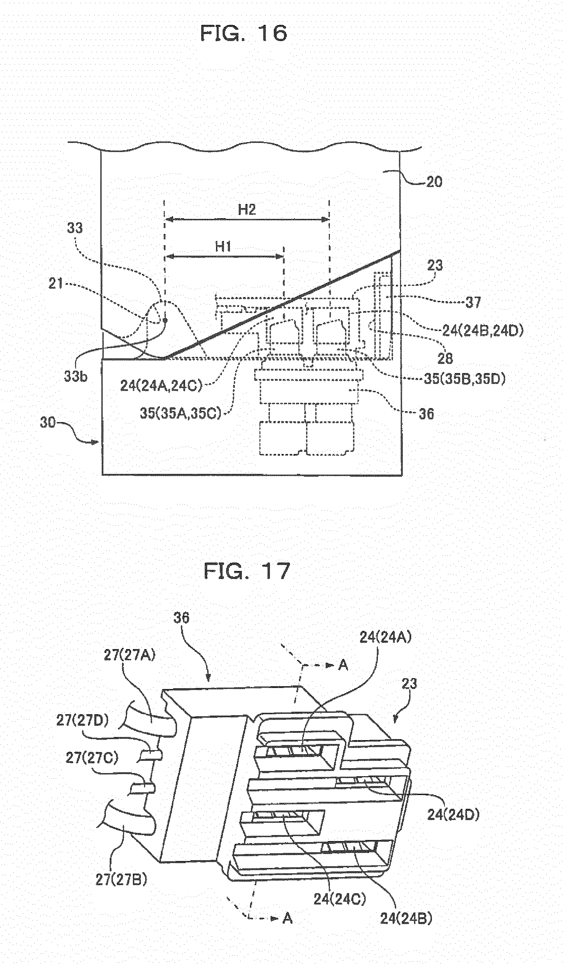

With this configuration, the connecting terminals 24 and 35 in the adjacent rows, that is, all the connecting terminals 24 and 35 in the present embodiment are laterally disposed at different positions when viewed along a direction from the pivot axis 33b to the connecting terminals 24 and 35. As compared with the connecting terminals 24 and 35 laterally disposed at the same position when viewed along the direction from the pivot axis 33b to the connecting terminals 24 and 35, the configuration can increase a distance L2 (FIG. 22) between the connecting terminals 24 and 35 in the different rows. Thus, this configuration can also reliably prevent a short circuit between the connecting terminals 24 and 35, thereby improving safety. Since all the connecting terminals 24A to 24D and 35A to 35D are disposed at different positions, advantageously, wires 27 (27A to 27D) connected to the connecting terminals 24A to 24D and 35A to 35D can be easily installed without overlapping as shown in FIG. 18 (FIGS. 17 and 18 only show the wires connected to the connecting terminals 24A to 24D of the battery unit 20).

With this configuration, when the battery unit 20 is installed, the terminals (the cathode(-) connecting terminals 24A and 35A, the communication connecting terminals 24C and 35C, and the anode(+) connecting terminals 24B and 35B) other than the connecting terminals 24D and 35D for detecting an installation state are connected prior to the connecting terminals 24D and 35D. After that, the connecting terminals 24D and 35D for detecting an installation state are finally bought into contact (connected) with each other. Thus, power is supplied from the battery unit 20 after the connecting terminals 24D and 35D for detecting an installation state come into contact with each other to detect the installation of the battery unit 20. This securely connects the cathode(-) connecting terminals 24A and 35A, which serve as connecting terminals for feeding, to the anode(+) connecting terminals 24B and 35B during power supply, thereby preventing an inrush current from deteriorating the cathode(-) connecting terminals 24A and 35A, which serve as connecting terminals for feeding, and the anode(+) connecting terminals 24B and 35B so as to improve safety. Furthermore, the connecting terminals are preferably connected in steps, for example, the anode(+) connecting terminals 24B and 35B are preferably connected after the cathode(-) connecting terminals 24A and 35A are connected.

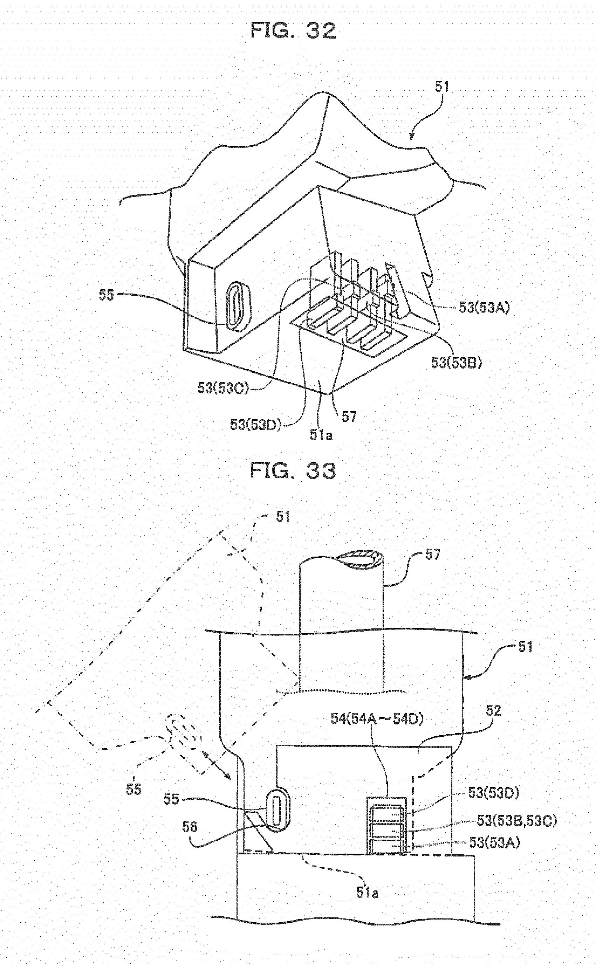

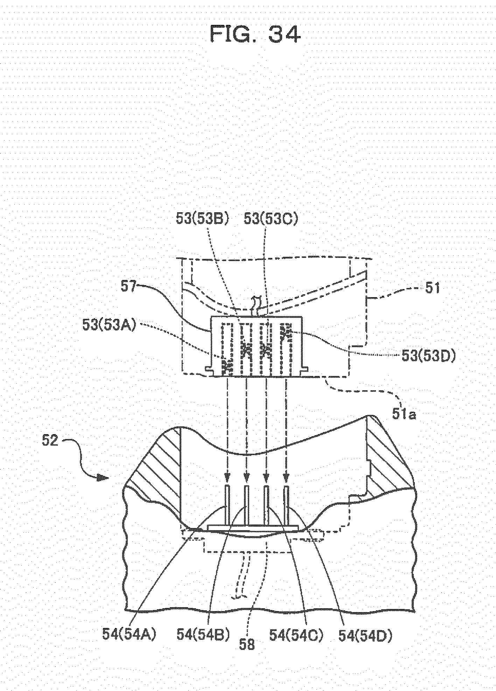

For example, in the related art where all the connecting terminals 53 (53A to 53D) and 54 (54A to 54D) are laterally arranged in a row, as shown in FIGS. 32 to 34, the arrangement of the connecting terminals 53 of the battery unit 51 at three (or four) different positions (heights from the bottom) needs to increase the height of the connector 57 containing the connecting terminals 53 or increase the heights of the protruding connecting terminals 54 of the battery installation portion 52. This leads to upsizing of the battery unit 51 including the connector 57.

In contrast to the related art, in the configuration of the present embodiment, the battery unit 20 and the battery installation portion 30 include the multiple (four in the present embodiment) connecting terminals 24 (24A to 24D) and 35 (35A to 35D) that are disposed in the two rows at different distances from the pivot axis 33b. Thus, also when the connecting terminals 35 (35A to 35D) of the battery installation portion 30 protrude to the same height, the connecting terminals come into contact with each other in steps according to the number of rows during installation. Specifically, in the present embodiment as shown in, for example, FIG. 26, the cathode(-) connecting terminals 24A and 35A and the communication connecting terminals 24C and 35C in the row near the pivot axis 33b are first brought into contact with each other, and then the anode(+) connecting terminals 24B and 35B and the connecting terminals 24D and 35D for detecting an installation state in the row remote from the pivot axis 33b are brought into contact with each other.

In the row near the pivot axis 33b, the cathode(-) connecting terminals 24A and 35A are disposed at a position (height) closer to the bottom 20a than the communication connecting terminals 24C and 35C. In the row remote from the pivot axis 33b, the anode(+) connecting terminals 24B and 35B are disposed at a position (height) closer to the bottom 20a than the connecting terminals 24D and 35D for detecting an installation state. Although the connecting terminals are disposed at the two positions from the bottom 20a, the connecting terminals 24 of the battery unit 20 come into contact with the connecting terminals 35 of the battery installation portion 30 in the order from the cathode(-) connecting terminals 24A and 35A, the communication connecting terminals 24C and 35C, the anode(+) connecting terminals 24B and 35B, and the connecting terminals 24D and 35D for detecting an installation state. In other words, when the battery unit 20 is installed, the cathode(-) connecting terminals 24A and 35A, the communication connecting terminals 24C and 35C, the anode(+) connecting terminals 24B and 35B, and the connecting terminals 24D and 35D for detecting an installation state are sequentially bought into contact (connected) with each other. The connecting terminals 24D and 35D for detecting an installation state finally come into contact with each other.

Thus, even the connecting terminals 24 (24A to 24D) disposed at just a few levels (two levels in the present embodiment) in the battery unit 20 does not cause any problems. The connecting terminals 24 (24A to 24D) can be brought into contact with the connecting terminals 35 (35A to 35D) of the battery installation portion 30 in a proper order. This can reduce the height of the battery-side connector 23 containing the connecting terminals 24 of the battery unit 20 and the heights of the connecting terminals 35 of the battery installation portion 30, achieving size reduction of the battery unit 20 or the battery installation portion 30.

In the present embodiment, the connecting terminals 24 (24A to 24D) of the battery unit 20 are set at the two positions (heights) in the battery-side connector 23. Thus, the same components can be advantageously used for the connecting terminals 24 (24A to 24D) of the battery unit 20 and the connecting terminals 35 (35A to 35D) of the battery installation portion 30. However, the present invention is not limited to this configuration. The connecting terminals 24 (24A to 24D) of the battery unit 20 may be components set at the same position (height) while the connecting terminals 35 (35A to 35D) of the battery installation portion 30 may be provided at two different heights.

In the present embodiment, the battery unit 20 includes the four connecting terminals 24 (24A to 24D) and the battery installation portion 30 includes the four connecting terminals 35 (35A to 35D). The number of connecting terminals is not particularly limited and may be two, three, five or more in the same configuration. Moreover, in the present embodiment, the connecting terminals 24 (24A to 24D) of the battery unit 20 and the connecting terminals 35 (35A to 35D) of the battery installation portion 30 are disposed in, but not exclusively, the two rows at different distances from the pivot axis 33b. A large number of connecting terminals may be disposed in three rows or more at different distances from the pivot axis 33b.

The connecting terminals 24D and 35D for detecting an installation state may be connecting terminals having functions other than the function of detecting an installation state of the battery unit 20. Furthermore, the connecting terminals 24D and 35D for detecting an installation state finally come into contact with each other, which is the last contact between the connecting terminals that actually perform an electrical function, a control function, and so on between the battery unit 20 and the battery installation portion 30. The order of contact does not include a support terminal or a dummy terminal that does not have the electrical function, the control function, and so on.

In this configuration, at the installation point of the battery unit 20 and the battery installation portion 30, the battery regulation recess 22 and the installation-portion regulation recess 33c are provided as recessed fittings and the battery regulation projection 29 and the installation-portion regulation projection 33a are provided as projections on the pivot protrusion 33 near the pivot axis 33b. Moreover, at the installation point of the battery unit 20 and the battery installation portion 30, the auxiliary regulation recess 28 is provided as a recessed fitting and the auxiliary regulation projection 37 is provided as a projecting portion on the opposite side (right side) remote from the pivot axis 33b.

With this configuration, when the battery unit 20 is installed into the battery installation portion 30, the recess (the battery regulation recess 22, the installation-portion regulation recess 33c, and the auxiliary regulation recess 28) and the projections (the battery regulation projection 29, the installation-portion regulation projection 33a, and the auxiliary regulation projection 37) at the installation point of the battery unit 20 and the battery installation portion 30 are fit to each other so as to be guided and positioned on both sides, thereby properly installing the battery unit 20. Even if the battery unit 20 is being reversely installed, the recesses and the projections interfere with each other, thereby preventing the battery unit 20 from being reversely installed. This can prevent damage and deformation of the connecting terminals 35 of the battery installation portion 30, thereby improving reliability.

In the present embodiment, the battery unit 20 and the battery installation portion 30 are disposed along the top surface of the down tube 2g. The present invention is not limited to this configuration. The battery installation portion 30 may be provided at any point on the body of the electric bicycle.

### [Industrial Applicability]

The present invention is applicable to various electric bicycles including detachable battery units.

## Claims

1. An electric bicycle (1) comprising a battery unit (20) detachably installed into a battery installation portion (30) provided on a body (2) of the electric bicycle (1),
wherein the battery installation portion (30) and the battery unit (20) include a plurality of connecting terminals (24, 35) electrically connected to each other,
the battery unit (20) is installed into the battery installation portion (30) while being pivoted about a pivot axis (33B),
the electrically connected connecting terminals (24, 35) of the battery unit (20) and the battery installation portion (30) are divided into a plurality of rows at different distances from the pivot axis and **characterized in that** a plurality of the connecting terminals are disposed in a row at an equal distance from the pivot axis (33B), and
the connecting terminals (24, 35) disposed in the row at an equal distance from the pivot axis (33B) and the connecting terminals (24, 35) disposed in the adjacent row are differently disposed in a lateral direction when viewed along a direction from the pivot axis (33B) to the connecting terminals (24, 35).

2. The electric bicycle (1) according to claim 1, wherein when the battery unit (20) is pivoted to be installed, contact timing of the connecting terminals (24, 35) varies between the rows.

3. The electric bicycle (1) according to any one of claims 1 to 2, wherein the connecting terminals (24, 35) are connecting terminals (24, 35) for detecting an installation state of the battery unit (20) and connecting terminals for detecting an installation state of the battery installation portion (30),
the installation of the battery unit (20) into the battery installation portion (30) is detected when the connecting terminals (24, 35) for detecting an installation state are electrically connected to each other, and
the connecting terminals (24, 35) for detecting an installation state of the battery unit (20) and the battery installation portion (30) are disposed in the row at a largest distance from the pivot axis (33B).

4. The electric bicycle (1) according to any one of claims 1 to 3, wherein at an installation point of the battery unit (20) and the battery installation portion (30), a recess and a projection are provided near the pivot axis (33B) and remote from the pivot axis so as to be fit to each other.

## Patentansprüche

1. Ein elektrisches Fahrrad (1), das eine Batterieeinheit (20) umfasst, die abnehmbar in einem Batterieinstallationsabschnitt (30) installiert ist, der an einem Körper (2) des elektrischen Fahrrads (1) vorgesehen ist,
wobei der Batterieinstallationsabschnitt (30) und die Batterieeinheit (20) eine Vielzahl von Verbindungsanschlüssen (24, 35) aufweisen, die elektrisch miteinander verbunden sind,
die Batterieeinheit (20) um eine Schwenkachse (33B) schwenkbar in den Batterieinstallationsabschnitt (30) eingebaut ist,
die elektrisch verbundenen Verbindungsanschlüsse (24, 35) der Batterieeinheit (20) und des Batterieinstallationsabschnitts (30) in mehrere Reihen mit unterschiedlichem Abstand zur Schwenkachse unterteilt sind,
**dadurch gekennzeichnet, dass** mehrere der Verbindungsanschlüsse in einer Reihe mit gleichem Abstand zur Schwenkachse (33B) angeordnet sind, und
die in der Reihe in einem gleichen Abstand von der Schwenkachse (33B) angeordneten Verbindungsanschlüsse (24, 35) und die in der benachbarten Reihe angeordneten Verbindungsanschlüsse (24, 35) in einer Richtung von der Schwenkachse (33B) zu den Verbindungsanschlüssen (24, 35) gesehen in einer seitlichen Richtung unterschiedlich angeordnet sind.

2. Das elektrische Fahrrad (1) nach einem der Anspruch 1, wobei beim Schwenken der Batterieeinheit (20) zum Einbau die Kontaktzeit der Verbindungsanschlüsse (24, 35) zwischen den Reihen variiert.

3. Das elektrische Fahrrad (1) nach einem der Ansprüche 1 bis 2, wobei die Verbindungsanschlüsse (24, 35) Verbindungsanschlüsse (24, 35) zum Erfassen eines Einbauzustandes der Batterieeinheit (20) und Verbindungsanschlüsse zum Erfassen eines Einbauzustandes des Batterieinstallationsabschnitts (30) sind,
der Einbau der Batterieeinheit (20) in den Batterieinstallationsabschnitt (30) erfasst wird, wenn die Verbindungsanschlüsse (24, 35) zum Erfassen eines Einbauzustandes elektrisch miteinander verbunden sind, und
die Verbindungsanschlüsse (24, 35) zum Erkennen eines Einbauzustandes der Batterieeinheit (20) und des Batterieinstallationsabschnitts (30) in der Reihe in einem größten Abstand von der Schwenkachse (33B) angeordnet sind.

4. Das elektrische Fahrrad (1) nach einem der Ansprüche 1 bis 3, wobei an einem Installationspunkt der Batterieeinheit (20) und des Batterieinstallationsabschnitts (30) eine Aussparung und ein Vorsprung nahe der Schwenkachse (33B) und entfernt von der Schwenkachse so angeordnet sind, dass sie zueinander passen.

## Revendications

1. Vélo électrique (1) comprenant une unité de batterie (20) installée de manière amovible dans une partie d'installation de batterie (30) disposée sur un cadre (2) du vélo électrique (1),
dans lequel la partie d'installation de batterie (30) et l'unité de batterie (20) incluent une pluralité de bornes de connexion (24, 35) raccordées électriquement l'une à l'autre,
l'unité de batterie (20) est installée dans la partie d'installation de batterie (30) tandis qu'étant tournée autour d'un axe de pivot (33B),
les bornes de connexion électriquement raccordées (24, 35) de l'unité de batterie (20) et de la partie d'installation de batterie (30) sont divisées en une pluralité de rangées à des distances différentes de l'axe de pivot et **caractérisées en ce que**
une pluralité de bornes de connexion sont disposées sur une rangée à une distance égale de l'axe de pivot (33B), et
les bornes de connexion (24, 35) disposées sur la rangée à une distance égale de l'axe de pivot (33B) et les bornes de connexion (24, 35) disposées sur la rangée adjacente sont différemment disposées dans une direction latérale lorsque visualisées le long d'une direction de l'axe de pivot (33B) aux bornes de connexion (24, 35).

2. Le vélo électrique (1) selon la revendication 1, dans lequel lorsque l'unité de batterie (20) est pivotée pour être installée, un minutage de contact des bornes de connexion (24, 35) varie entre les rangées.

3. Le vélo électrique (1) selon l'une quelconque des revendications 1 à 2, dans lequel les bornes de connexion (24, 35) sont des bornes de connexion (24, 35) pour détecter un état d'installation de l'unité de batterie (20) et des bornes de connexion pour détecter un état d'installation de la partie d'installation de batterie (30),
l'installation de l'unité de batterie (20) dans la partie d'installation de batterie (30) est détectée lorsque les bornes de connexion (24, 35) pour détecter un état d'installation sont électriquement raccordées l'une à l'autre, et
les bornes de connexion (24, 35) pour détecter un état d'installation de l'unité de batterie (20) et de la partie d'installation de batterie (30) sont disposées sur une rangée à une distance la plus importante de l'axe de pivot (33B).

4. Le vélo électrique (1) selon l'une quelconque des revendications 1 à 3, dans lequel sur un point d'installation de l'unité de batterie (20) et de la partie d'installation de batterie (30), une cavité et une projection sont disposées proches de l'axe de pivot (33B) et éloignées de l'axe de pivot de sorte à s'adapter l'une à l'autre.
